# EUROPÄISCHE PATENTSCHRIFT

(11) **EP 1 104 516 B1**
(45) Veröffentlichungstag und Bekanntmachung des Hinweises auf die Patenterteilung: **23.07.2003**
(21) Anmeldenummer: 00947777.9
(22) Anmeldetag: 07.06.2000
(51) Int. Cl.: F16H 59/02, B60K 20/06, B60R 16/00

(54) **VORRICHTUNG ZUM SCHALTEN EINES AUTOMATGETRIEBES**
DEVICE FOR CHANGING THE GEARS OF AN AUTOMATIC TRANSMISSION
DISPOSITIF POUR LE PASSAGE DES VITESSES D'UNE TRANSMISSION AUTOMATIQUE

(30) Priorität: 12.06.1999 DE 19926823
(43) Veröffentlichungstag der Anmeldung: 06.06.2001
(73) Patentinhaber: ZF Lemförder Metallwaren AG, 49441 Lemförde (DE)
(72) Erfinder: VOLLMAR, Reinhard, D-88213 Ravensburg (DE)
(86) Internationale Anmeldenummer: DE0001819
(87) Internationale Veröffentlichungsnummer: WO00077425

(56) Entgegenhaltungen:
- EP-A- 0 844 128
- EP-A- 0 895 003
- DE-A- 4 005 588
- DE-A- 4 311 852
- DE-A- 4 423 744
- DE-A- 19 739 626
- DE-C- 4 324 788
- DE-C- 19 539 847
- US-A- 5 365 803

## Beschreibung

Die vorliegende Erfindung betrifft eine Vorrichtung zum Schalten eines Automatgetriebes für Kraftfahrzeuge nach dem Oberbegriff des Anspruchs 1.

Kraftfahrzeuge mit einem Automatgetriebe weisen üblicherweise ein im Armaturenbrett angeordnetes Displayfeld zur Anzeige über die jeweilige Wählhebelstellung des auf dem Kardantunnel angeordneten Wählhebels auf. Dies hat den Vorteil, dass sich der Fahrer durch einen Blick auf das Display über die Wählhebelstellung vergewissern und gleichzeitig und den Verkehr beobachten kann. Nachteilig ist dabei noch, dass der Fahrer beim Bedienen des Wählhebels oder eines Programmschalters auf den Wählhebelbock oder den Programmschalter schaut, um in die gewünschte Wählhebel- oder Programmschalterstellung umzuschalten.

Eine gattungsgemäße Vorrichtung zum Schalten eines Automatgetriebes für Kraftfahrzeuge, die einen Wählhebel aufweist, der in einer ersten Stellung ein automatisches Hoch- und Rückschalten des Getriebes als Funktion der Fahrzeuggeschwindigkeit bzw. der Motordrehzahl ermöglicht und die eine zusätzliche Anordnung am Lenkrad aufweist, die ein manuelles Rückschalten bzw. Hochschalten ermöglicht, wobei die zusätzliche Anordnung in den Lenkradkranz integriert ist, geht aus der DE 195 39 847 A1 hervor. Diese bekannte Ausführung weist jedoch zahlreiche Einzelteile auf und ist daher nur mit erheblichem Montageaufwand und den damit verbundenen Herstellungskosten erzeugbar.

Aus der DE 40 05 588 A ist eine Schaltvorrichtung für ein Automatgetriebe bekannt, die einen in mindestens einer Schaltgasse geführten Wählhebel aufweist. Mit diesem sind verschiedene Getriebegänge sowohl in einer automatischen als auch in einer manuellen Schaltgasse vorwählbar. Die manuelle Schaltung in dieser Schaltgasse weist von einer Mittelstellung ausgehende durch Antippen schaltbare Ganghoch- und Rückschaltstellungen auf. Die automatische Schaltung wird in der Schaltgasse vorgenommen, welche die Getriebeschaltstellungen wie Parkstellung, Rückwärtsfahrstellung und Vorwärtsschaltstellungen aufweist, was durch entsprechendes Verschieben des Wählhebels in dieser Gasse bewirkt wird. Zum Schalten der Gänge wird ein Lenkstockschalter verwendet. Bei einem Ausführungsbeispiel ist ein Wählhebel vorgesehen, der unmittelbar den Schaltgassen zugeordnet ist und nach Art eines Wippschalters betätigbar ist und der die Getriebegänge manuell durch Antippen in die Hoch- und Rückschaltposition umschaltet.

Die DE 43 24 788 C beschreibt ein Kraftfahrzeug mit einem lastschaltbaren Getriebe, das wahlweise über einen den Schaltgassen zugeordneten Wählhebel automatisch schaltbar oder auch manuell schaltbar ist, wobei zusätzlich die manuelle Schaltung statt über den Wählhebel im Bereich der Schaltgassen über eine am Lenkrad angeordnete Betätigungseinrichtung erfolgen kann, wenn der Wählhebel in der manuellen Schaltgasse steht. Diese Betätigungseinrichtung besteht aus einer in mindestens einer Lenkradspeiche mittels eines Gehäuses eingebetteten fingerbetätigten Schaltwippe zum manuellen Hochund Herunterschalten des Getriebes, wobei die Schaltwippe mit hintereinander in Längsrichtung des Fahrzeugs ausgerichteten Griffflächen, mit einer quer zum Lenkrad angeordneten Schwenkachse und mit einem Schaltweg in gegensätzliche Richtungen zwischen achsgleich angeordneten Druckschaltern verschwenkbar ist und wobei die Außenoberfläche der Schaltwippe eine mit der Außenkontur des Speichenpolsters bündig verlaufende Oberfläche aufweist.

Zwar wird hiermit eine manuelle Schaltung eines Automatgetriebes geschaffen, jedoch muß der Fahrer zum Betätigen der Schaltwippe mindestens einen seiner Finger vom Lenkrad lösen und in einer Suchbewegung die Schaltwippe in der Lenkradspeiche aufsuchen.
Aus der DE 43 11 852 A ist schließlich eine Betätigungseinrichtung zum manuellen Auslösen des Schaltvorgangs eines Fahrzeuggetriebes, insbesondere des gestuften Schaltbetriebs eines kontinuierlich verstellbaren Getriebes, bekannt, wobei diese Betätigungseinrichtung im Lenkradmittenbereich insbesondere im Bereich der dort vorhandenen Prallplatte angeordnet ist. Die Betätigungseinrichtung kann dabei mindestens einen Taster für die Auslösung eines Gangwechsels aurweisen oder aber auch zwei Taster, die direkt nebeneinander oder im Abstand voneinander angeordnet sind, wobei einer der Taster dem Hochschalten und der andere Taster dem Herunterschalten dient. Auch hierbei muß mindestens einer der Finger, üblicherweise der Daumen, von Lenkradkranz gelöst werden, um einen der Taster zu bedienen.

Nachteilig bei allen Schalteranordnungen im Lenkrad mit übereinander angeordneten Schaltern ist die Möglichkeit einer Fehlbedienung durch den Fahrer. Bei größeren Lenkwinkeln muß der Fahrer das Lenkrad umgreifen. Liegt der Schalter für die Hochschaltung in der Lenkradneutrallage beispielsweise relativ zum Schalter für die Rückschaltung oben, so ist diese Schaltanorndung bei einer halben oder eineinhalbfachen Lenkraddrehung horizontal gespiegelt und der Schalter für die Hochschaltung jetzt der untere.

Aufgabe der Erfindung ist es, eine Vorrichtung zum Schalten eines Automatgetriebes zu schaffen, mit der eine manuelle Schaltung des Getriebes besonders griffgünstig und fehlbedienungssicher vom Lenkrad aus durchführbar ist und die einfach im Aufbau und billig in der Herstellung ist.

Ausgehend von einer Vorrichtung der eingangs näher genannten Art erfolgt die Lösung dieser Aufgabe mit den im kennzeichnenden Teil des Anspruchs 1 angegebenen Merkmalen; vorteilhafte Ausgestaltungen sind in den Unteransprüchen beschrieben.

Erfindungsgemäß ist also vorgesehen, dass die zusätzliche Anordnung zum manuellen Rückschalten bzw. Hochschalten in bestimmten Fahrsituationen in den Lenkradkranz integriert ist und zwar vorzugsweise in demjenigen Bereich, der üblicherweise von einer der Hände des Fahrers umfaßt wird.

Das um seine Längsachse drehbar gelagerte bzw. elastisch verformbare Segment des Lenkradkranzes bedarf nur einer geringen Kraftbeaufschlagung, um das manuelle Rückschalten bzw. Hochschalten zu ermöglichen, wobei sämtliche Finger des Fahrers am Lenkradkranz in der üblichen Stellung verbleiben können.

Durch die erfindungsgemäße Achsensymmetrie der Schalteinrichtung relativ zum Lenkradkranz ändert sich die Betätigungsrichtung für gleichartige Schaltungen für den Fahrer bei allen Lenkradeinschlägen nicht. Die dadurch erzielte Sicherheit gegen eine Fehlbedienung ist ein wesentlicher Beitrag zur Fahrsicherheit.

Im folgenden wird die Erfindung anhand der Zeichnung näher erläutert, in der zwei vorteilhafte Ausrührungsbeispiele dargestellt sind.

Es zeigen:
- Figur 1: eine Draufsicht auf ein erfindungsgemaß ausgestaltetes Lenkrad für das Kraftfahrzeug,
- Figur 2a: ein Kontaktschema für den Taster,
- Figur 2b: eine graphische Darstellung der aufzubringenden Kraft bei Verdrehung des Lenkradsegmentes,
- Figur 3: eine Teilansicht eines Lenkrades für ein zweites Ausführungsbeispiel und
- Figur 4: einen Schnitt entlang der Linie I-I von Figur 3.

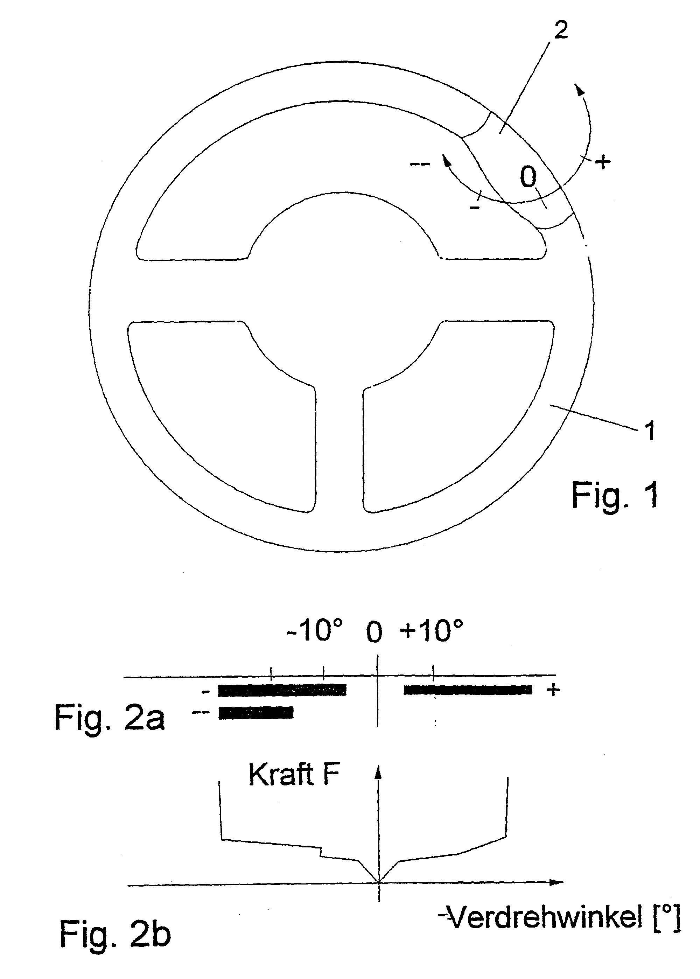

Figur 1 zeigt eine Draufsicht auf ein Lenkrad, welches in herkömmlicher Weise aus einem Lenkradkranz 1 besteht, der bei diesem Ausführungsbeispiel über drei Speichen mit einer Lenkradnabe verbunden ist, auf der ein Pralltopf angeordnet ist, beispielsweise zur Aufnahme eines Airbags. Erfindungsgemäß weist nun der Lenkradkranz 1 ein Segment 2 auf, welches in den Lenkradkranz 1 integriert ist, d. h. den gleichen Durchmesser aufweist, jedoch um die Längsachse drehbar ausgestaltet ist. Diese Drehbarkeit in Figur 1 ist durch den gebogenen Doppelpfeil angedeutet. Vorteilhafterweise ist dieses Segment 2 als Taster ausgebildet, sodass bei Verdrehung des Segmentes 2 Schaltvorgänge des Automatgetriebes manuell ausgeführt werden können.

Bei einem bevorzugten Ausführungsbeispiel weist der Taster des Lenkradsegmentes 2 für Rückschaltvorgänge zwei Rastierungen auf, wobei in der ersten Rastierung nur Einfachrückschaltungen in den nächst niederen Gang ausgeführt werden, während in der zweiten Rastierung mit maximaler Geschwindigkeit in den kleinsten zulässigen Gang zuruckgeschaltet wird.

Ein entsprechendes Kontaktschema ist in Figur 2a dargestellt. Mit 0 ist dabei die Neutralstellung des Segmentes 2 bezeichnet, ebenso wie in Figur 1. Eine leichte Verdrehung des Segmentes 2 in Figur 1 nach links (-) führt dabei in die erste Raststellung, d. h. zur Kontaktierung eines entsprechenden Kontaktes (in Figur 2a oben links eingezeichnet), eine weitere Verdrehung in eine zweite Stellung (--) führt dabei zur Kontaktierung eines zweiten Kontaktes und damit zu der zweiten Rastierung, in der das Herunterschalten mit maximaler Geschwindigkeit in den kleinsten zulässigen Gang ermöglicht wird.

Figur 2b zeigt die für diese Schaltvorgänge notwendige Kraft F, die auf der Ordinate aufgetragen ist, während aus der Abszisse die Winkelverdrehung des Segmentes 2 in Winkelgrad angegeben ist.

Der manuelle Schaltbetrieb wird durch Verdrehung des Segmentes 2 aktiviert, wenn entweder ein Schalter geschlossen wird, beispielsweise der (nicht dargestellte) Wählhebel sich in der manuellen Schaltgasse auf dem Schaltbock der Kardanwelle befindet oder aber wenn der im Segment 2 enthaltene Taster betätigt wird. Mit Betätigung dieses Tasters wird zugleich das Display im Armaturenbrett umgeschaltet und die angeforderte Schaltung ausgeführt.

Dieser manuelle Schaltbetrieb wird verlassen, wenn der manuelle Schalter wieder auf Automatik gestellt wird; wurde der manuelle Schaltbetrieb im Automatikmodus angefordert, so kann der manuelle Betrieb durch Betätigen des Segmentes 2 in die entgegengesetzte Richtung (+ in Figur 2) über eine bestimmte Zeit hinweg, beispielsweise eine Sekunde, erfolgen, wobei hier die in Figur 2a oben rechts und mit einem Pluszeichen versehene Kontaktierung zustande kommt.

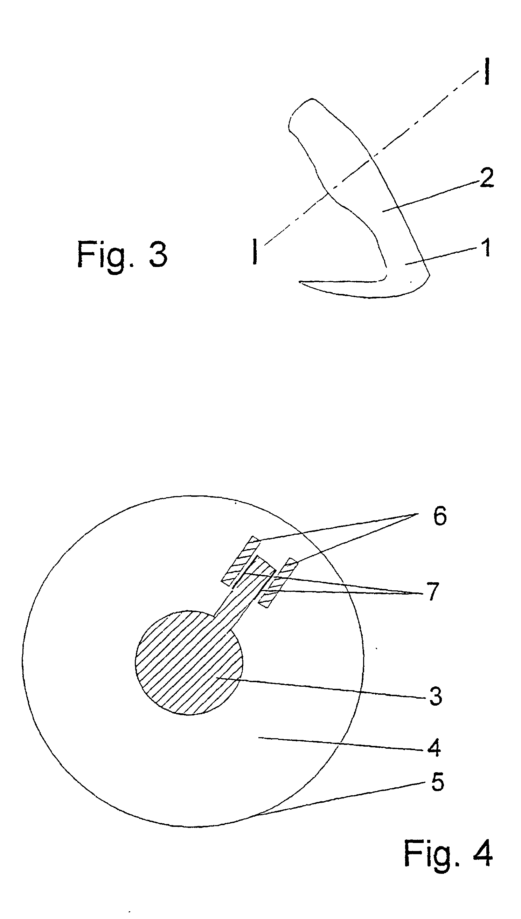

Bei dem in Figur 3 und 4 darstellten zweiten Ausführungsbeispiel wird eine noch größere Vereinfachung erzielt und damit eine günstige Serienherstellung ermöglicht. Hierbei ist das Segment 2 nicht mehr verdrehbar um seiner Längsachse in den Lenkradkranz 1 integriert, sondern als elastisch verformbares Segment ausgestaltet.

Wie der in Figur 4 gezeigte Querschnitt entlang der Linie I-I von Figur 3 erkennen läßt, ist in dem Segment 2 des Lenkradkranzes 1 ein entsprechender Schalter integriert, beispielsweise ein Folienschalter oder ein Drucksensorschalter, mit dem die gewünschte manuelle Schaltung eingeleitet wird. Das Lenkrad besteht in üblicher Weise aus einem Lenkradkern 3, beispielsweise aus Metall, welches von einer Umschäumung 4 umgeben ist. die von einer Hülle, beispielsweise einer Lederhülle 5 überzogen ist. Fest mit dem Lenkradkern 3 verbunden ist ein mit 7 bezeichneter Folienschalter oder ein Drucksensorschalter, wobei an beiden Seiten Platten 6, z. B. aus Kunststoff, angeordnet sind. Bekannte Folienschalter haben einen betätigungskraft-proportionalen, elektrischen Innenwiderstand, z. B. einen Widerstandsbereich von 2 MΩ bei einer Druckkraft 0,1 N bis 1 KΩ bei 100 N. Damit könnte in der zugehörigen Elektronik für das Automatgetriebe der gewünschte Punkt genau abgestimmt werden, an dem durch Kontaktierung des Folienschalters bzw. Drucksensorschalters die entsprechende Rückschaltung ausgelöst werden soll. Für das einfache Herunterschalten in den nächst niederen Gang bzw. das Herunterschalten mit maximaler Geschwindigkeit in den kleinsten zulässigen Gang ist bei diesem Ausführungsbeispiel nur ein Drucksensorschalter nötig.

### Bezugszeichen

- 1: Lenkradkraoz
- 2: Segment
- 3: Lenkradkern
- 4: ümschäumung
- 5: Lenkradhülle
- 6: Platten
- 7: Schalter

## Patentansprüche

1. Vorrichtung zum Schalten eines Automatgetriebes für Kraftfahrzeuge, die einen Wählhebel aufweist, der in einer ersten Stellung ein automatisches Hoch- und Rückschalten des Getriebes als Funktion der Fahrzeuggeschwindigkeit bzw. der Motordrehzahl ennöglicht,und die eine zusätzliche Anordnung am Lenkrad aufweist, die ein manuelles Rückschalten bzw. Hochschalten ermöglicht,
**dadurch gekennzeichnet, dass** die zusätzliche Anordnung ein in den Lenkradkranz integriertes, und um die Längsachse elastisch verformbares Segment des Lenkradkranzes ist, dem ein durch eine Verdrehkraft betätigbarer Schalter zugeordnet ist.

2. Vorrichtung nach Anspruch 1,
**dadurch gekennzeichnet, dass** der Schalter ein Folienschalter ist.

3. Vorrichtung nach Anspruch 1,
**dadurch gekennzeichnet, dass** der Schalter ein Drucksensorschalter ist.

## Claims

1. Device for shifting an automatic transmission for motor vehicles, which device has a selector lever permitting, in a first position, automatic shifting up and shifting back of the transmission as a function of the speed of the vehicle or the rotational speed of the engine, and has an additional arrangement on the steering wheel which permits manual shifting back or shifting up,
**characterised in that** the additional arrangement is a segment of the steering-wheel rim which is integrated into the said steering-wheel rim and is elastically deformable about the longitudinal axis and with which a switch, which can be actuated by a twisting force, is associated.

2. Device according to claim 1,
**characterised in that** the switch is a membrane switch.

3. Device according to claim 1,
**characterised in that** the switch is a pressure-sensor switch.

## Revendications

1. Dispositif pour commuter une boîte de vitesses automatique pour véhicules automobiles, comportant un levier de sélection qui, dans une première position, permet une commutation automatique de la boîte de vitesses sur une vitesse plus élevée ou sur une vitesse inférieure en fonction de la vitesse du véhicule ou de la vitesse de rotation du moteur, et qui possède un dispositif supplémentaire qui est installé sur le volant de direction et qui permet un passage manuel à une vitesse inférieure ou à une vitesse plus élevée,
**caractérisé en ce que** le dispositif supplémentaire est un segment de la couronne du volant de direction, qui est intégré dans la couronne du volant de direction et est déformable élastiquement autour de l'axe longitudinal et auquel est associé un interrupteur pouvant être actionné par une force de rotation.

2. Dispositif selon la revendication 1,
**caractérisé en ce que** l'interrupteur est un interrupteur à membrane.

3. Dispositif selon la revendication 1,
**caractérisé en ce que** l'interrupteur est un interrupteur à capteur de pression.
